# FASCICULE DE BREVET EUROPEEN

(11) **EP 4 484 245 B1**
(45) Date de publication et mention de la délivrance du brevet: **25.11.2026**
(21) Numéro de dépôt: 24184588.2
(22) Date de dépôt: 26.06.2024
(51) Int. Cl.: B61C 9/38, B61C 9/50, B60K 17/02, F16H 48/30

(54) **DISPOSITIF D ENTRAINEMENT DE VÉHICULE, NOTAMMENT POUR UN VÉHICULE FERROVIAIRE**
FAHRZEUGANTRIEBSVORRICHTUNG, INSBESONDERE FÜR EIN SCHIENENFAHRZEUG
VEHICLE DRIVE DEVICE, IN PARTICULAR FOR A RAIL VEHICLE

(30) Priorité: 27.06.2023 FR 2306716
(43) Date de publication de la demande: 01.01.2025
(73) Titulaire: ALSTOM Holdings, 93400 Saint-Ouen-sur-Seine (FR)
(72) Inventeur: BENAIS, Cyrille, 71670 SAINT FIRMIN (FR); BERNY, Vincent, 71390 SAINTE HÉLÈNE (FR)
(74) Mandataire: Plasseraud IP

(56) Documents cités:
- EP-A1- 4 227 185
- DE-A1- 102021 208 388
- DE-B4- 102014 226 385
- US-B2- 10 428 903
- US-B2- 9 033 839

## Description

La présente invention concerne un dispositif d'entrainement de véhicule, notamment pour un véhicule ferroviaire.

Un tel dispositif d'entrainement comporte un moteur électrique, notamment un moteur à aimants permanents, connecté à des roues du véhicule afin d'entrainer ces roues en rotation.

En cas de défaut d'alimentation électrique du moteur, notamment de défaut électrique dans le moteur ou en amont du moteur, ou encore de déconnexion électrique du moteur, le moteur, connecté aux roues, reste entrainé en rotation par effet d'inertie des roues. Cet entrainement du moteur non alimenté peut générer un arc électrique, un tel arc électrique pouvant endommager le moteur et/ou son environnement, voire provoquer un incendie.

Le document de brevet US9033839B2 décrit un découpleur de transmission à entraînement direct destiné à être utilisé dans des véhicules électriques. Le document de brevet EP 4 227 185 A1 décrit un ensemble d'entraînement et véhicule associé.

L'invention a notamment pour but de remédier à ce problème, en proposant un dispositif d'entrainement permettant d'éviter la génération d'arc électrique en cas de défaut d'alimentation électrique du moteur.

A cet effet, l'invention a notamment pour objet un dispositif d'entrainement de véhicule, notamment de véhicule ferroviaire, comportant un moteur électrique alimenté au moyen d'un circuit électrique et entrainant un arbre d'entrainement destiné à être couplé à un essieu du véhicule, le dispositif d'entrainement comportant des moyens de couplage mécanique de l'arbre d'entrainement avec ledit essieu, caractérisé en ce que les moyens de couplage comportent :
- un moyeu, solidaire de l'arbre d'entrainement,
- un pignon, connecté à l'arbre d'entrainement par une liaison pivot,
- un coulisseau, entourant le moyeu et solidaire en rotation de ce moyeu, le coulisseau étant mobile en translation le long du moyeu, parallèlement à l'arbre d'entrainement, entre une position d'engagement dans laquelle le coulisseau est engagé avec le pignon et ainsi lié en rotation avec ce pignon, et une position de retrait dans laquelle le coulisseau est en retrait du pignon,
- un actionneur électromagnétique alimenté au moyen du circuit électrique, configuré pour appliquer une première force déplaçant le coulisseau vers sa position d'engagement lorsqu'il est activé, et
- un organe élastique de rappel du coulisseau vers sa position de retrait, appliquant une seconde force déplaçant le coulisseau vers sa position de retrait, la seconde force étant inférieure à la première force.

Le manchon est maintenu en position d'engagement par l'actionneur électromagnétique. L'actionneur électromagnétique étant alimenté au moyen du même circuit électrique que le moteur, et notamment par une même source d'énergie électrique, en cas de défaut dans le circuit électrique, l'actionneur électromagnétique est désactivé, si bien que le manchon ne subit plus que la force de l'organe élastique de rappel, qui l'entraine vers sa position de retrait.

Le moteur est ainsi déconnecté mécaniquement des roues, évitant ainsi les risques d'arcs électriques dans le moteur.

En outre, le dispositif d'entrainement comporte des moyens de détection de courts circuits, dans le circuit électrique et/ou dans le moteur, et des moyens de commande de l'actionneur électromagnétique, configurés pour désactiver l'actionneur électromagnétique lorsqu'un court-circuit est détecté par les moyens de détection.

Un dispositif d'entrainement selon l'invention peut comporter en outre l'une ou plusieurs des caractéristiques suivantes, prises seules ou selon toutes combinaisons techniquement envisageables.
- Le coulisseau comporte un plateau s'étendant perpendiculairement à l'arbre d'entrainement, et un manchon de forme générale cylindrique coaxiale à l'arbre d'entrainement, le manchon entourant le moyeu et étant lié en rotation à ce moyeu, l'actionneur électromagnétique étant agencé en regard du plateau pour appliquer la première force à ce plateau.
- Le plateau est fixe en rotation, et mobile en translation parallèlement à l'axe de l'arbre d'entrainement, le manchon étant mobile en rotation par rapport au plateau et solidaire en translation avec ce plateau.
- Le dispositif d'entrainement comporte des moyens, directs ou indirects, de mesure de la vitesse du pignon, et des moyens de pilotage du moteur pour que la différence de vitesse entre le moyeu et le pignon soit inférieure à une vitesse prédéfinie, par exemple inférieure à 100 rpm, avant un couplage du coulisseau avec le pignon.
- Le dispositif d'entrainement comporte un dispositif de synchronisation, porté par le pignon, destiné à réduire la différence de vitesse entre le pignon et le coulisseau.
- Le dispositif de synchronisation comporte une première partie solidaire du pignon et une seconde partie montée sur la première partie et mobile par rapport à cette première partie, chacune des première et seconde parties comportant une denture respective, les dentures étant destinées à coopérer avec une denture complémentaire ménagée sur le coulisseau, et les première et seconde parties étant agencées pour que le coulisseau vienne s'engager sur la denture de la seconde partie avant la denture de la première partie.
- Le dispositif d'entrainement comporte une boite à engrenages connectant cinématiquement le pignon à l'essieu.

L'invention concerne également un véhicule, notamment véhicule ferroviaire, caractérisé en ce qu'il comporte un dispositif d'entrainement tel que défini précédemment.

Différents aspects et avantages de l'invention seront mis en lumière à la lecture de la description qui va suivre, donnée uniquement à titre d'exemple non limitatif et faite en se référant aux figures annexées, parmi lesquelles :
- [Fig 1] La figure 1 est un schéma de principe, représentant schématiquement un dispositif d'entrainement selon l'invention ;
- [Fig 2] La figure 2 représente schématiquement un détail de la figure 1, montrant des moyens de couplage du dispositif d'entrainement de la figure 1 ;

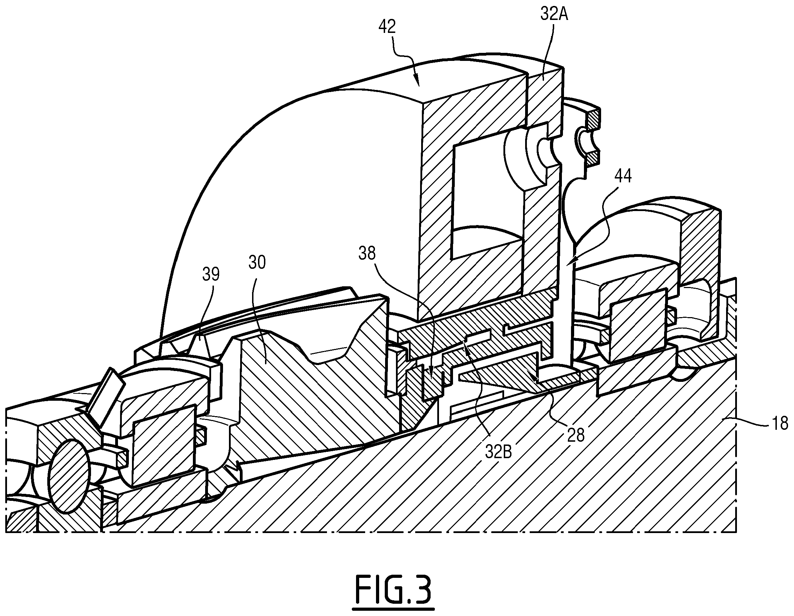

- [Fig 3] La figure 3 est une vue en perspective partielle des moyens de couplage de la figure 2, selon un exemple de mode de réalisation ;
- [Fig 4] La figure 4 est une vue en coupe des moyens de couplage de la figure 3, dans une première configuration de couplage ;
- [Fig 5] La figure 5 est une vue similaire à la figure 4 des moyens de couplage dans une seconde configuration de découplage ;
- [Fig 6] La figure 6 est une vue en perspective d'un détail des moyens de couplage.

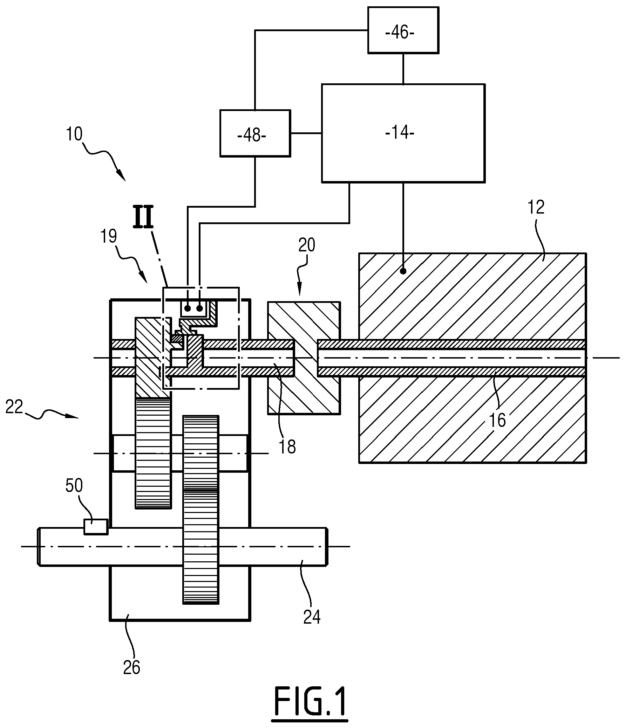

On a représenté schématiquement, sur la figure 1, un dispositif 10 d'entrainement pour un véhicule, et plus particulièrement pour un véhicule ferroviaire. Le véhicule ferroviaire peut être de tout type envisageable, par exemple un train à grande vitesse, un tramway, un métro, etc.

Dans le cas d'un véhicule ferroviaire, le dispositif d'entrainement 10 est de préférence agencé sur un bogie moteur de ce véhicule ferroviaire. Plus particulièrement, le bogie moteur comporte au moins un essieu 24 motorisé, qui est entrainé en rotation par ledit dispositif d'entrainement 10.

Le dispositif d'entrainement 10 comporte un moteur électrique 12, par exemple un moteur à aimants permanents, alimenté électriquement au moyen d'un circuit électrique 14.

Le circuit électrique 14 est de type classique, reliant électriquement le moteur électrique 12 à au moins une source d'énergie électrique, par des moyens de connexion électrique et de l'électronique de puissance. La source d'énergie électrique peut être formée par au moins un pantographe coopérant avec une caténaire, et/ou par au moins une batterie embarquée sur le véhicule. Le circuit électrique 14 peut par exemple être relié à la fois à au moins un pantographe et à au moins une batterie, le circuit électrique 14 étant configuré pour passer d'une source d'énergie à l'autre en fonction de la situation, par exemple en fonction de la section de voie sur laquelle circule le véhicule.

Le moteur électrique 12 comporte, de manière classique, un stator et un rotor. Un arbre de sortie 16 est solidaire en rotation du rotor.

L'arbre de sortie 16 est classiquement relié en rotation à un arbre d'entrainement 18, par exemple au moyen d'un coupleur 20. L'arbre de sortie 16 et l'arbre d'entrainement 18 peuvent être coaxiaux, ou en variante présenter des axes de rotation décalés radialement et/ou, dans une autre variante, formant un angle entre eux.

Le dispositif d'entrainement 10 comporte par ailleurs des moyens d'entrainement 22, reliant l'arbre d'entrainement 18 avec l'au moins un essieu 24 du véhicule et plus particulièrement de l'essieu motorisé du bogie portant le dispositif d'entrainement, dit « bogie motorisé ». L'essieu 24 porte de manière classique des roues (non représentées) du véhicule. Les moyens d'entrainement 22 selon l'invention comportent également des moyens 19 de couplage de l'arbre d'entrainement 18 avec les moyens d'entrainement 22.

Dans le cas d'un véhicule comprenant plusieurs bogies motorisés, et/ou plusieurs moteurs, ce véhicule comporte de préférence une pluralité de dispositifs d'entrainement 10. Chaque dispositif d'entrainement 10 est par exemple associé à un essieu 24 distinct, ou en variante à plusieurs essieux 24. Le circuit électrique 14 peut par ailleurs, au moins en partie, être commun à plusieurs moteurs 12.

Les moyens d'entrainement 22 comportent également, de manière classique, une boite 26 à engrenages mécaniques, comprenant des engrenages reliant l'arbre d'entrainement 18 à l'essieu 24.

L'invention prévoit de permettre un découplage de l'arbre de sortie 16 et de l'arbre d'entrainement 18, comme cela sera décrit ci-dessous.

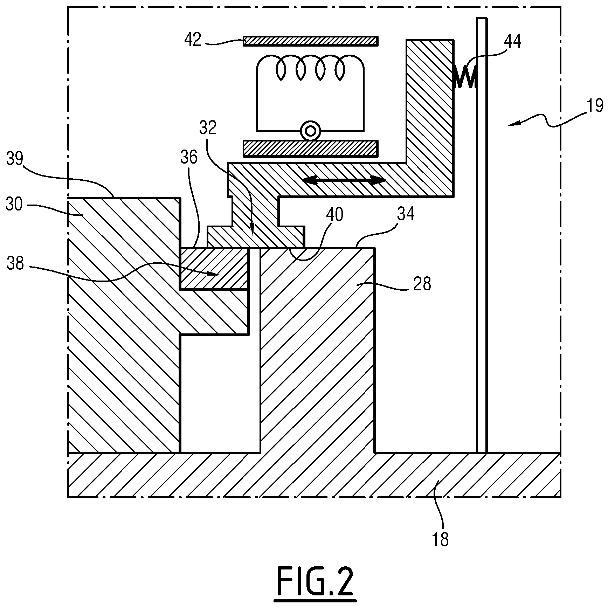

A cet effet, les moyens de couplage 19, représentés plus en détail sur la figure 2, comportent un moyeu 28 solidaire de l'arbre d'entrainement 18, un pignon 30 monté autour de l'arbre d'entrainement 18 et relié à cet arbre d'entrainement 18 par une liaison pivot, et un coulisseau 32 propre à connecter ou déconnecter le moyeu 28 et le pignon 30 entre eux.

Le pignon 30 est coaxial à l'arbre d'entrainement 18, et libre en rotation par rapport à cet arbre d'entrainement 18 tant qu'aucun autre élément ne vient influer sur leur liaison.

Le pignon 30 porte, directement ou indirectement en fonction du mode de réalisation considéré, une surface extérieure cannelée 36. Dans le mode de réalisation décrit, la surface extérieure cannelée 36 est portée indirectement par le pignon 30, par un dispositif 38 de synchronisation mécanique qui sera décrit ultérieurement plus en détail.

Il est à noter que le pignon 30 comporte par ailleurs une denture 39 coopérant avec l'un des engrenages de la boîte à engrenages 26.

Le coulisseau 32 quant à lui entoure le moyeu 28, et il est au moins en partie lié en rotation à ce moyeu 28, par exemple au moyen de clavettes ou par coopération de dentures. Par exemple, le coulisseau 32 présente une surface intérieure cannelée 40 coopérant avec une surface extérieure cannelée 34 du moyeu 28.

Dans l'exemple décrit, le coulisseau 32 comporte un plateau 32A s'étendant perpendiculairement à l'arbre d'entrainement 18, et un manchon 32B de forme générale cylindrique coaxiale à l'arbre d'entrainement 18. Le manchon 32B entoure le moyeu 28, et il est lié en rotation à ce moyeu 28.

Conformément à un exemple de réalisation, le plateau 32A est fixe en rotation, et mobile en translation parallèlement à l'axe de l'arbre d'entrainement 18. Le manchon 32B est mobile en rotation par rapport au plateau 32A et solidaire en translation avec ce plateau 32A.

Le manchon 32B est mobile en translation le long du moyeu 28, parallèlement à l'arbre d'entrainement 18, entre une position d'engagement dans laquelle le manchon 32B est engagé avec le pignon 30 (c'est-à-dire que la surface intérieure cannelée 40 coopère avec la surface extérieure cannelée 36), et une position de retrait dans laquelle le manchon 32B est en retrait du pignon 30 (si bien que la surface intérieure cannelée 40 ne coopère pas avec la surface extérieure cannelée 36).

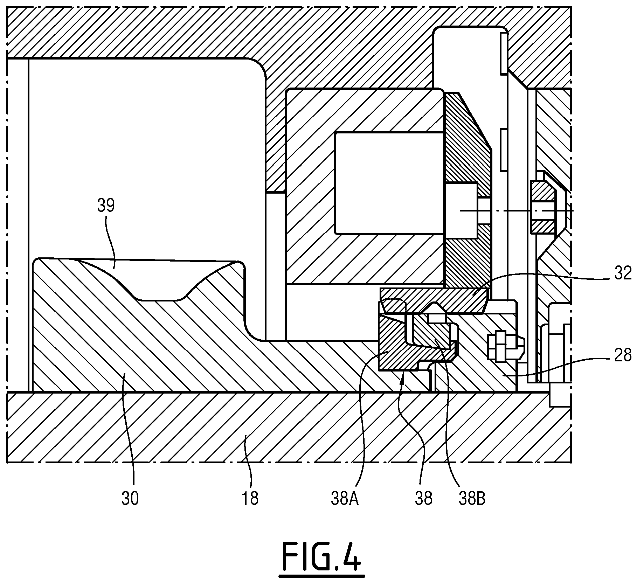

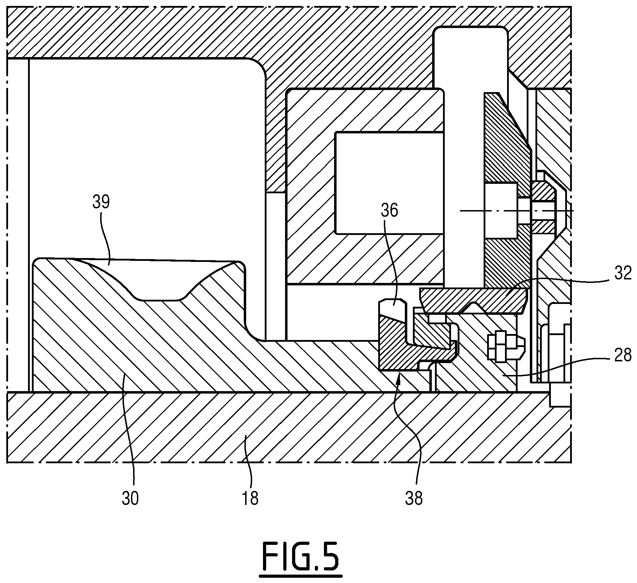

La position d'engagement est représentée sur la figure 4, et la position de retrait est représentée sur la figure 5.

Les moyens de couplage 19 comportent un actionneur électromagnétique 42 (également appelé électro-aimant), alimenté au moyen du circuit électrique 14, et configuré pour appliquer au coulisseau 32, et plus particulièrement au plateau 32A qui est agencé en regard de cet actionneur électromagnétique 42, une première force déplaçant ce coulisseau 32 vers sa position d'engagement lorsque cet actionneur électromagnétique 42 est activé.

L'actionneur électromagnétique 42 est de préférence monostable, c'est-à-dire qu'il ne présente qu'un état stable, dans lequel il reste tant qu'il est actionné.

Les moyens de couplage 19 comportent par ailleurs un organe élastique 44 de rappel du coulisseau 32 vers sa position de retrait, appliquant au coulisseau 32, et notamment au plateau 32A, une seconde force déplaçant ce coulisseau 32 vers sa position de retrait, la seconde force étant inférieure à la première force.

Ainsi, lorsque l'actionneur électromagnétique 42 est activé, la première force étant supérieure à la seconde force, et en sens opposé, le coulisseau 32 est maintenu dans sa position d'engagement.

Lorsque le coulisseau 32 est dans sa position d'engagement, comme cela est représenté sur la figure 4, la surface intérieure cannelée 40 coopère avec la surface extérieure 36, le manchon 32B restant lié en rotation au moyeu 28. Le moyeu 28 et le pignon 30 sont ainsi reliés en rotation. En d'autres termes, le pignon 30 est ainsi relié en rotation avec l'arbre d'entrainement 18. Ce pignon 30 entraine alors l'essieu 24 par l'intermédiaire des moyens d'entrainement 22, de manière connue en soi.

Il s'agit de la position de fonctionnement normal. L'actionneur 42 est activé, et le coulisseau 32 accouple le pignon 30 au moyeu 28, si bien qu'il y a une transmission normale de puissance mécanique entre l'arbre d'entrainement 18 et l'essieu 24.

En revanche, lorsque l'actionneur électromagnétique 42 est désactivé, le coulisseau 32 n'est soumis qu'à la seconde force, et il passe donc dans sa position de retrait, dans laquelle il est maintenu jusqu'à une éventuelle réactivation de l'actionneur électromagnétique 42.

Lorsque le coulisseau 32 est dans sa position de retrait, comme cela est représenté sur la figure 5, il ne coopère pas avec le pignon 30. Le pignon 30, qui est couplé à l'essieu 24, est alors libre en rotation par rapport à l'arbre d'entrainement 18. Ceci permet donc de découpler le moteur des roues, notamment en cas de défaut électrique, comme cela sera décrit ultérieurement.

Ainsi, il apparait clairement que le moteur peut être découplé des roues de manière simple, directe et efficace, par désactivation de l'actionneur électromagnétique 42.

Ceci peut survenir dans diverses situations.

Dans le cas le plus simple d'une panne électrique dans le circuit électrique 14, par exemple due à un court-circuit important, dans le circuit électrique 14 ou le moteur 12, ou par exemple due à une coupure d'alimentation électrique pour quelque raison que ce soit, le moteur 12 n'est plus alimenté, et doit être découplé des roues pour éviter la formation d'un arc électrique, comme précédemment décrit. L'actionneur électromagnétique 42 étant alimenté par le même circuit électrique 14 que le moteur 12, cet actionneur électromagnétique 42 cesse donc également d'être alimenté en même temps que le moteur 12. L'actionneur électromagnétique 42, cessant d'être alimenté, n'applique plus la première force sur le manchon 32, qui passe donc en position de retrait, découplant l'arbre d'entrainement 18 de l'essieu.

Le véhicule peut alors continuer son trajet avec un moteur 12 isolé mécaniquement.

En outre, le dispositif d'entrainement 10 comporte des moyens 46 de détection de courts circuits, dans le circuit électrique 14 et/ou dans le moteur 12. Ces moyens de détection de courts circuits 46 permettent de détecter les courts circuits ne provoquant pas une interruption totale de l'alimentation électrique comme dans le cas précédemment décrit. Des tels moyens de détection de courts circuits sont connus en soi, et ne seront donc pas décrits en détail, un homme du métier spécialiste en électronique sachant comment réaliser de tels moyens de détection.

Le dispositif d'entrainement 10 comporte alors des moyens 48 de commande de l'actionneur électromagnétique 42, configurés pour désactiver l'actionneur électromagnétique 42 lorsqu'un court-circuit est détecté par les moyens de détection 46. Ces moyens de commande 48 sont donc avantageusement connectés aux moyens de détection 46 pour recevoir un signal en cas de court-circuit.

Lorsque les moyens de commande 48 désactivent l'actionneur électromagnétique 42, celui-ci n'applique plus la première force sur le coulisseau 32, qui passe donc en position de retrait, découplant l'arbre d'entrainement 18 de l'essieu.

L'invention a également une utilité pour gérer un changement de section d'alimentation d'un véhicule ferroviaire. Ceci est par exemple le cas lorsque le véhicule ferroviaire passe d'une section alimentée par caténaire à une section non alimentée, auquel cas le véhicule passe d'une alimentation par caténaire à une alimentation sur batterie. Ce cas peut de manière alternative être envisagé dans toute situation de changement d'alimentation électrique.

Pour un changement de section d'alimentation en toute sécurité, il est préférable de découpler le moteur des roues avant le changement de section, pour les coupler à nouveau après le changement de section. Les moyens de commande 48 désactivent donc l'actionneur électromagnétique avant le changement de section, et le réactivent après le changement de section. Ces actions peuvent être réalisées automatiquement suite à un signal de changement de section, transmis aux moyens de commande, par un système de guidage du véhicule ou par une balise. En variante, ces actions sont réalisées manuellement par un conducteur du véhicule.

Il est toutefois à noter que, dans le cas d'un couplage lorsque le véhicule en mouvement, que ce soit lors d'un changement de section d'alimentation ou suite à un court-circuit sans gravité, le moyeu 28 et le pignon 30 n'ont pas la même vitesse de rotation, si bien qu'il est préférable de les synchroniser pour pouvoir les relier en rotation via le coulisseau 32.

A cet effet, le dispositif d'entrainement 10 comporte de préférence des moyens pour mesurer la vitesse du pignon 30. Par exemple, les moyens de mesure de la vitesse du pignon 30 permettent une mesure indirecte, en mesurant notamment la vitesse de l'essieu 24 à l'aide de moyens 50 classiques de mesure de la vitesse de l'essieu 24. La vitesse du pignon 30 étant liée à celle de l'essieu 24, elle est donc calculée en fonction de la vitesse de l'essieu 24.

En variante, le dispositif d'entrainement 10 comporte des moyens directs de mesure de la vitesse du pignon 30.

Connaissant la vitesse du pignon 30, la vitesse de rotation de l'arbre d'entrainement 18 est modifiée, en influant sur le moteur 12, pour parvenir la plus proche possible de cette vitesse de rotation du pignon 30. Cette modification de la rotation de l'arbre d'entrainement 18 est réalisée par un système classique de pilotage du moteur 12.

Par exemple, le moteur 12 est piloté pour que la différence de vitesse entre le moyeu 28 et le pignon 30 soit inférieure à 100 rpm (tours par minute). On peut toutefois prévoir des systèmes de pilotage de moteur plus précis pour réduire encore davantage cette différence de vitesse.

Conformément au mode de réalisation décrit, le dispositif d'entrainement 10 comporte, comme décrit précédemment, le dispositif de synchronisation 38. Ce dispositif de synchronisation permet, après que la différence de vitesse ait été réduite à moins de 100 rpm, de réduire encore cette différence de vitesse.

Le dispositif de synchronisation 38, visible sur les figures 4 et 5, comporte par exemple une première partie 38A solidaire du pignon 30 et une seconde partie 38B montée sur la première partie 38A et mobile par rapport à cette première partie 38A, et propre à synchroniser sa vitesse de rotation avec celle de la première partie 38A. Chacune des première 38A et seconde 38B parties comporte une denture, la denture de la première partie 38A formant la seconde surface extérieure cannelée 36. Les première 38A et seconde 38B parties sont agencées pour que le manchon 32B vienne s'engager sur la denture de la seconde partie 38B avant la denture de la première partie 38A.

En d'autres termes, la seconde partie 38B permet d'absorber l'énergie nécessaire à la synchronisation des vitesses de rotation des pièces à accoupler, et ce n'est que lorsque la vitesse de rotation du manchon 32B est synchronisée avec celle de la première partie 38A, grâce à l'action de la seconde partie 38B, que ce manchon vient s'engager sur la première partie 38A.

Le dispositif de synchronisation 38 est connu en soi, si bien qu'un homme du métier saura le réaliser. Par exemple, le dispositif de synchronisation 38 est du type Borg-Warner, notamment décrit dans le document « Techniques de l'ingénieur BM5668 » sur la Synchronisation des boites de vitesses.

Conformément à un mode de réalisation préféré, la denture de la seconde partie 30B est conformée pour faciliter l'engagement avec le manchon 32B, et le retrait du manchon 32B.

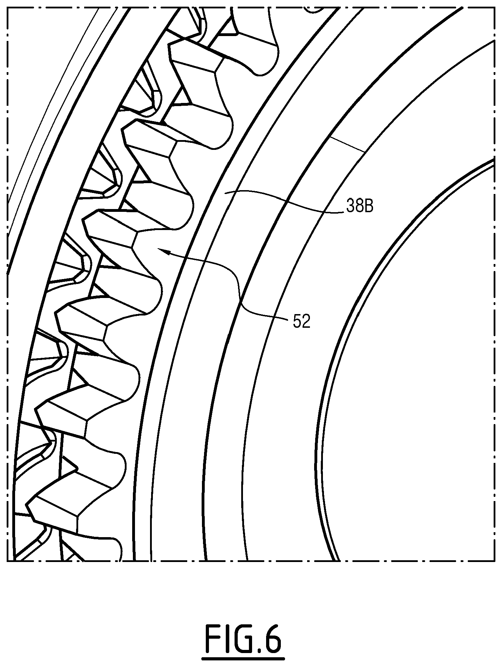

A cet effet, comme cela est représenté sur la figure 6, chaque dent 52 de la denture présente, vue de face dans une direction radiale, une forme évasée, s'élargissant en s'éloignant du manchon 32B dans la direction de déplacement du manchon 32B. Il en résulte que l'espace entre deux dents 52 adjacentes est plus large au niveau de l'embouchure destinées à accueillir le manchon 32B.

On notera que l'invention n'est pas limitée au mode de réalisation précédemment décrit, et pourrait présenter diverses variantes complémentaires, sans sortir du cadre des revendications.

## Revendications

1. Dispositif (10) d'entrainement de véhicule, notamment de véhicule ferroviaire, comportant un moteur électrique (12) alimenté au moyen d'un circuit électrique (14) et entrainant un arbre d'entrainement (18) destiné à être couplé à un essieu (24) du véhicule, le dispositif d'entrainement (10) comportant des moyens (19) de couplage mécanique de l'arbre d'entrainement (18) avec ledit essieu (24), les moyens de couplage (19) comportant :
- un moyeu (28), solidaire de l'arbre d'entrainement (18),
- un pignon (30), connecté à l'arbre d'entrainement (18) par une liaison pivot,
- un coulisseau (32), entourant le moyeu (28) et solidaire en rotation de ce moyeu (28), le coulisseau (32) étant mobile en translation le long du moyeu (28), parallèlement à l'arbre d'entrainement (18), entre une position d'engagement dans laquelle le coulisseau (32) est engagé avec le pignon (30) et ainsi lié en rotation avec ce pignon (30), et une position de retrait dans laquelle le coulisseau (32) est en retrait du pignon (30),
- un actionneur électromagnétique (42) alimenté au moyen du circuit électrique (14), configuré pour appliquer une première force déplaçant le coulisseau (32) vers sa position d'engagement lorsqu'il est activé, et
- un organe élastique (44) de rappel du coulisseau (32) vers sa position de retrait, appliquant une seconde force déplaçant le coulisseau (32) vers sa position de retrait, la seconde force étant inférieure à la première force,
**caractérisé en ce qu'**il comporte des moyens (46) de détection de courts circuits, dans le circuit électrique (14) et/ou dans le moteur (12), et des moyens (48) de commande de l'actionneur électromagnétique (42), configurés pour désactiver l'actionneur électromagnétique (42) lorsqu'un court-circuit est détecté par les moyens de détection (46).

2. Dispositif d'entrainement (10) selon la revendication 1, dans lequel le coulisseau (32) comporte un plateau (32A) s'étendant perpendiculairement à l'arbre d'entrainement (18), et un manchon (32B) de forme générale cylindrique coaxiale à l'arbre d'entrainement (18), le manchon (32B) entourant le moyeu (28) et étant lié en rotation à ce moyeu (28), l'actionneur électromagnétique (42) étant agencé en regard du plateau (32A) pour appliquer la première force à ce plateau (32A).

3. Dispositif d'entrainement (10) selon l'une quelconque des revendications précédentes, comportant des moyens, directs ou indirects, de mesure de la vitesse du pignon (30), et des moyens de pilotage du moteur (12) pour que la différence de vitesse entre le moyeu (28) et le pignon (30) soit inférieure à une vitesse prédéfinie, par exemple inférieure à 100 rpm, avant un couplage du coulisseau (32) avec le pignon (30).

4. Dispositif d'entrainement (10) selon la revendication 3, comportant un dispositif de synchronisation (38), porté par le pignon (30), destiné à réduire la différence de vitesse entre le pignon (30) et le coulisseau (32).

5. Dispositif d'entrainement (10) selon la revendication 4, dans lequel le dispositif de synchronisation (38) comporte une première partie (38A) solidaire du pignon (30) et une seconde partie (38B) montée sur la première partie (38A) et mobile par rapport à cette première partie (38A), chacune des première (38A) et seconde (38B) parties comportant une denture respective, les dentures étant destinées à coopérer avec une denture complémentaire ménagée sur le coulisseau (32), et les première (38A) et seconde (38B) parties étant agencées pour que le coulisseau (32) vienne s'engager sur la denture de la seconde partie (38B) avant la denture de la première partie (38A).

6. Dispositif d'entrainement selon l'une quelconque des revendications précédentes, comprenant une boite à engrenages (26) connectant cinématiquement le pignon (30) à l'essieu (24).

7. Véhicule, notamment véhicule ferroviaire, **caractérisé en ce qu'**il comporte un dispositif d'entrainement selon l'une quelconque des revendications précédentes.

## Patentansprüche

1. Antriebsvorrichtung (10) eines Fahrzeugs, insbesondere eines Schienenfahrzeugs, umfassend einen Elektromotor (12), welcher mittels eines elektrischen Kreises (14) gespeist wird und eine Antriebswelle (18) antreibt, welche dazu bestimmt ist, an eine Achse (24) des Fahrzeugs gekoppelt zu sein, wobei die Antriebsvorrichtung (10) Mittel (19) zur mechanischen Kopplung der Antriebswelle (18) mit der Achse (24) umfasst, wobei die Mittel zur Kopplung (19) umfassen:
- eine fest mit der Antriebswelle (18) verbundene Nabe (28),
- ein Ritzel (30), welches mit der Antriebswelle (18) über eine Drehverbindung verbunden ist,
- einen Schieber (32), welcher die Nabe (28) umgibt und drehfest mit dieser Nabe (28) verbunden ist, wobei der Schieber (32) entlang der Nabe (28) translatorisch beweglich ist, parallel zur Antriebswelle (18), zwischen einer Eingriffsposition, in welcher der Schieber (32) mit dem Ritzel (30) in Eingriff ist und daher rotatorisch mit diesem Ritzel (30) gekoppelt ist, und einer Rückzugsposition, in welcher der Schieber (32) vom Ritzel (30) zurückgezogen ist,
- einen elektromagnetischen Betätiger (42), welcher mittels des elektrischen Kreises (14) gespeist wird und dazu konfiguriert ist, eine erste Kraft aufzubringen, welche den Schieber (32) in seine Eingriffsposition verschiebt, wenn er aktiviert ist, und
- ein elastisches Rückstellorgan (44) zur Rückstellung des Schiebers (32) in seine Rückzugsposition, welches eine zweite Kraft aufbringt, welche den Schieber (32) in seine Rückzugsposition verschiebt, wobei die zweite Kraft kleiner ist als die erste Kraft,
**dadurch gekennzeichnet, dass** sie Erkennungsmittel (46) für Kurzschlüsse im elektrischen Kreis (14) und/oder im Motor (12) und Steuerungsmittel (48) des elektromagnetischen Betätigers (42) umfasst, welche dazu konfiguriert sind, den elektromagnetischen Betätiger (42) zu deaktivieren, wenn ein Kurzschluss durch die Erkennungsmittel (46) erkannt wird.

2. Antriebsvorrichtung (10) nach Anspruch 1, wobei der Schieber (32) einen Teller (32A) umfasst, welcher sich senkrecht zur Antriebswelle (18) erstreckt, und eine Hülse (32B) von allgemein zylindrischer, zur Antriebswelle (18) koaxialer Form, wobei die Hülse (32B) die Nabe (28) umgibt und rotatorisch mit dieser Nabe (28) gekoppelt ist, wobei der elektromagnetische Betätiger (42) gegenüber dem Teller (32A) angeordnet ist, um die erste Kraft auf diesen Teller (32A) aufzubringen.

3. Antriebsvorrichtung (10) nach einem der vorangegangenen Ansprüche, umfassend direkte oder indirekte Mittel zur Messung der Geschwindigkeit des Ritzels (30) und Ansteuerungsmittel des Motors (12), damit die Geschwindigkeitsdifferenz zwischen der Nabe (28) und dem Ritzel (30) kleiner ist als eine vordefinierte Geschwindigkeit, beispielsweise kleiner als 100 Umdrehungen pro Minute, vor einer Kopplung des Schiebers (32) mit dem Ritzel (30).

4. Antriebsvorrichtung (10) nach Anspruch 3, umfassend eine Synchronisationsvorrichtung (38), welche von dem Ritzel (30) getragen ist, welche dazu bestimmt ist, die Geschwindigkeitsdifferenz zwischen dem Ritzel (30) und dem Schieber (32) zu verringern.

5. Antriebsvorrichtung (10) nach Anspruch 4, wobei die Synchronisationsvorrichtung (38) einen ersten Teil (38A), welcher fest mit dem Ritzel (30) verbunden ist, und einen zweiten Teil (38B) umfasst, welcher auf dem ersten Teil (38A) montiert ist und bezüglich dieses ersten Teils (38A) beweglich ist, wobei jeder des ersten (38A) und des zweiten (38B) Teils eine jeweilige Verzahnung umfasst, wobei die Verzahnungen dazu bestimmt sind, mit einer komplementären Verzahnung, welche am Schieber (32) ausgebildet ist, zusammenzuwirken, und wobei der erste (38A) und der zweite (38B) Teil so angeordnet sind, dass der Schieber (32) mit der Verzahnung des zweiten Teils (38B) in Eingriff kommt, bevor er mit der Verzahnung des ersten Teils (38A) in Eingriff kommt.

6. Antriebsvorrichtung nach einem der vorangegangenen Ansprüche, aufweisend ein Getriebe (26), welches das Ritzel (30) kinematisch mit der Achse (24) verbindet.

7. Fahrzeug, insbesondere Schienenfahrzeug, **dadurch gekennzeichnet, dass** es eine Antriebsvorrichtung nach einem der vorangegangenen Ansprüche umfasst.

## Claims

1. Drive device (10) for a vehicle, in particular a rail vehicle, comprising an electric motor (12) powered by means of an electric circuit (14) and driving a drive shaft (18) intended to be coupled to an axle (24) of the vehicle, the drive device (10) comprising means (19) for mechanically coupling the drive shaft (18) to said axle (24), the coupling means (19) comprising:
- a hub (28), secured to the drive shaft (18),
- a pinion (30), connected to the drive shaft (18) by a pivot connection,
- a slider (32), surrounding the hub (28) and rotating together with this hub (28), the slider (32) being movable in translation along the hub (28), parallel to the drive shaft (18), between an engaged position, in which the slider (32) is engaged with the pinion (30) and thus connected in rotation with this pinion (30), and a disengaged position, in which the slider (32) is disengaged from the pinion (30),
- an electromagnetic actuator (42) powered by the electrical circuit (14), configured to apply a first force that moves the slider (32) to its engaged position when it is activated, and
- an elastic member (44) for returning the slider (32) to its disengaged position, applying a second force that moves the slider (32) to its disengaged position, the second force being lower than the first force,
**characterised in that** it comprises means (46) for detecting short circuits, in the electrical circuit (14) and/or in the motor (12), and means (48) for controlling the electromagnetic actuator (42), configured to deactivate the electromagnetic actuator (42) when a short circuit is detected by the detection means (46).

2. Drive device (10) according to claim 1, wherein the slider (32) comprises a plate (32A) extending perpendicularly to the drive shaft (18), and a sleeve (32B) with a cylindrical general shape coaxial to the drive shaft (18), the sleeve (32B) surrounding the hub (28) and being rotatably connected to this hub (28), the electromagnetic actuator (42) being arranged opposite the plate (32A) to apply the first force to this plate (32A).

3. Drive device (10) according to any one of the preceding claims, comprising means, direct or indirect means, for measuring the speed of the pinion (30), and means for controlling the motor (12) so that the speed difference between the hub (28) and the pinion (30) is less than a predefined speed, for example less than 100 rpm, prior to a coupling of the slider (32) with the pinion (30).

4. Drive device (10) according to claim 3, comprising a synchronisation device (38), carried by the pinion (30), intended to reduce the speed difference between the pinion (30) and the slider (32).

5. Drive device (10) according to claim 4, wherein the synchronisation device (38) comprises a first portion (38A) secured to the pinion (30) and a second portion (38B) mounted on the first portion (38A) and movable relative to this first portion (38A), each of the first (38A) and second (38B) portions comprising a respective toothing, the toothings being intended to cooperate with a complementary toothing formed on the slider (32), and the first (38A) and second (38B)) portions being arranged so that the slider (32) engages with the toothing of the second portion (38B) before the toothing of the first portion (38A).

6. Drive device according to any one of the preceding claims, comprising a gearbox (26) kinematically connecting the pinion (30) to the axle (24).

7. Vehicle, in particular a rail vehicle, **characterised in that** it comprises a drive device according to any one of the preceding claims.
